# EUROPEAN PATENT SPECIFICATION

(11) **EP 1 140 683 B1**
(45) Date of publication and mention of the grant of the patent: **21.01.2004**
(21) Application number: 00967898.8
(22) Date of filing: 19.10.2000
(51) Int. Cl.: B65H 75/00

(54) **SUPPORT BELT FOR STRIPS OF DEFORMABLE MATERIAL, APPARATUS AND METHOD FOR USE THEREOF**
TRÄGERBAND ZUM TRAGEN EINES STREIFENFÖRMIGEN VERFORMBAREN MATERIALS, VORRICHTUNG UND VERFAHREN ZU DESSEN VERWENDUNG
COURROIE DE SUPPORT POUR BANDES DE MATERIAU DEFORMABLE, DISPOSITIF ET PROCEDE D'UTILISATION DE CETTE COURROIE

(30) Priority: 27.10.1999 EP 99203541; 12.11.1999 US 164963 P
(43) Date of publication of application: 10.10.2001
(73) Proprietor: PIRELLI PNEUMATICI Società per Azioni, 20126 Milano (IT)
(72) Inventor: VOLPI, Alessandro, I-20144 Milano (IT)
(74) Representative: Ferroni, Filippo
(86) International application number: PCT/EP2000/010347
(87) International publication number: WO 2001/030678

(56) References cited:
- EP-A- 0 567 147
- US-A- 3 420 365
- US-A- 4 113 092
- US-A- 5 004 635
- PATENT ABSTRACTS OF JAPAN vol. 1996, no. 03, 29 March 1996 (1996-03-29) -& JP 07 290596 A (BRIDGESTONE CORP), 7 November 1995 (1995-11-07)

## Description

The present invention relates, according in a general aspect, to the manufacture of tyres.

As is known, for the industrial manufacture of a tyre various semifinished products are assembled together to form a single-piece structure, said products including a carcass ply, at least one pair of annular cores for reinforcing the beads, usually called bead cores, a belt structure, a pair of side walls, a tread band and a plurality of other reinforcing or filling components which confer to the whole structure a predefined geometry as well as a predefined dimensions and all the mechanical-strength and all the qualitative characteristics which are necessary for a good performance of the tyre on the road.

Some of these semifinished products consist of rubber strips having different width and thickness depending on the circumstances; in order to use them during the industrial production of the tyres, they are arranged in special storage coils, wound as a continuous strip having a length equal to a multiple of the length necessary for a tyre.

An example which illustrates this state of the art is described in British Patent No. 1,495,803 in the name of the Goodyear Tyre & Rubber Company.

This patent, which was published in 1977, describes how, for the manufacture and the subsequent application of the components referred to above, the rubber strips supplied by a drawing machine or other production machine, are arranged on top of a thin fabric support belt unwound from a respective coil.

Another example of belt of the prior art is disclosed in European patent application N. 0 567 147.

The use of this support belt, or other textile support, is necessary owing to the fact that the unprocessed rubber, in particular when it is still hot, is made of a plastic material which is highly deformable when subject to any type of stress and is therefore unable to withstand the pulling force which is necessary for feeding the belt to the tyre forming machine: the main purpose of this belt is precisely that of withstanding this pulling force, protecting the seutifiaished product from unacceptable deformations.

The thin belt and the strip placed on it are then rolled up together so as to form a storage coil which will be used, during the production of the tyres, to supply the required component to the abovementioned forming machines.

In this way the turns of each rolled-up rubber strip are separated from each other by the support belt, thereby avoiding the risk of becoming attached to each other: indeed, if the unprocessed rubber, soon after production, were rolled up into the coil without the presence of the belt, the wound turns would inevitably tend to adhere to each other, making it extremely difficult, if not even impossible, to separate them from each other and in any case subjecting the semifinished product to a pulling force which would change in an unacceptable manner the geometrical dimensions thereof, as well as the characteristics of homogeneity and uniformity.

The simple belt considered in the British patent cited above is not, however, entirely satisfactory: indeed, it cannot prevent compression of the rubber strip in the packing coil, owing to the weight which bears on the wound turns.

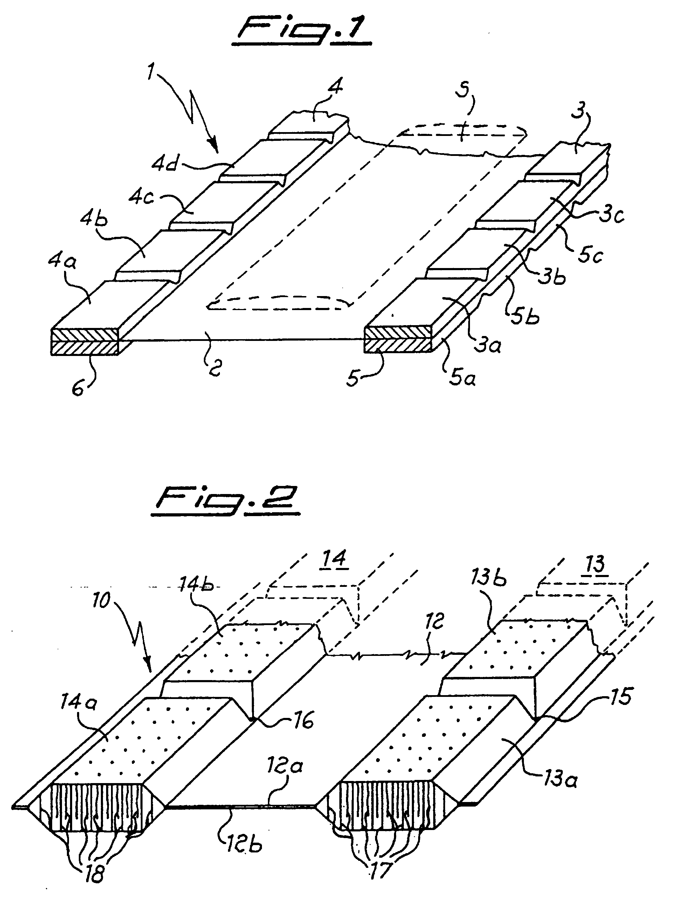

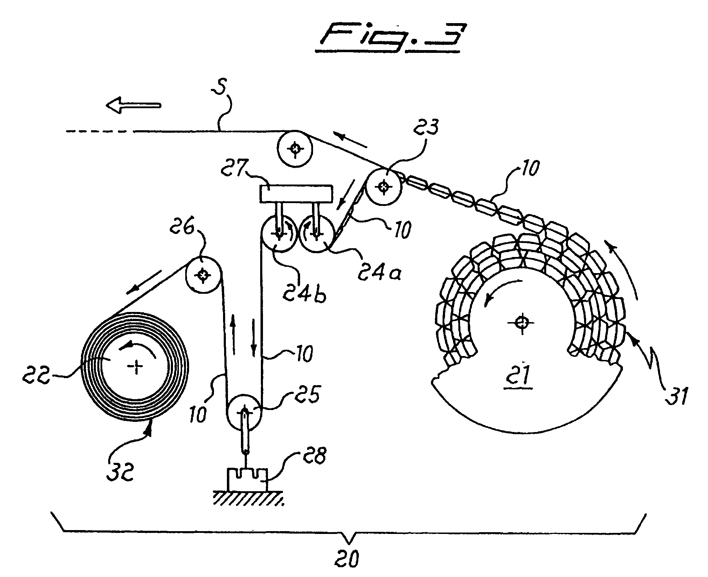

For this reason a special belt for supporting the rubber strips is currently known, as shown in Fig. 1.

As can be seen from the drawing, the belt 1 consist of a thin central band 2 of flexible material (for example that commercially known with the registered trademark "Mylar"), on the edges thereof the linear elements 3, 4, 5 and 6 are provided.

The latter essentially consist of reinforcing rims made of suitable materials, for example expanded elastomer material of suitable thickness, and have V-shaped incisions transversely cut so as to form basically a series of blocks 3a, 3b, 3c, 4a, 4b, 4c, etc.; in this way the belt is provided with the necessary flexibility so that it may be wound up on itself.

The linear elements 3-6 support the central band 2 on which the strip S of a component for the manufacture of tyres (shown in broken lines in Fig. 1) is placed and serve as spacers between the various turns of the packing coil, when the belt 1 is wound together with the strip S.

This, obviously, provided that the thickness of the strip S is less than that of each pair of juxtaposed linear elements 3-6 in the winding.

In this connection, it must be noted how the flat configuration of the linear elements 3-6 ensures stable seating of the various turns, also in the case of relative displacement thereof in an axial direction with respect to the coil (caused for example by shocks or the like); this aspect will emerge more clearly from the description of the invention which follows further below.

There are, however, certain drawbacks associated with the known support belts of the type considered above.

Firstly it should be pointed out that the repeated belt winding and unwinding cycles may result in breakage, due to fatigue, of the central band 2 and in particular of the linear elements 3-6; indeed the materials from which these elements are made and referred to above, generally have a limited strength and in the long run are subject to breakage owing to the continuous mechanical stresses, in particular bending stresses, to which they are subject.

Secondly it must be pointed out that, owing to the limited bending strength of the aforementioned materials, it is not possible to wind the belt 1 with a radius below a certain limit value; consequently, the packagings obtained are generally bulky and in particular have the same dimensions both when they are full or empty.

In other words, since the thickness of the belt 1 is determined by that of the linear elements 3-6 and is therefore constant because the latter are made of semi-rigid material, the belt winding in the coil has the same dimensions, irrespective as to whether the strip S is present or not inside it.

This means that, also from a handling point of view, these coil packagings are disadvantageous because they occupy the same space when they are full and when they are empty.

The Applicant has found that this state of the art may be overcome using a belt for storing semifinished products in the form of rubber strips used for the manufacture of tyres, comprising a central band for supporting the semifinished product, which is provided along its edges with spacing elements having a variable configuration.

According to a first aspect thereof, the invention relates to a belt for storing strip-shaped semifinished products, comprising a central support band along the edges thereof inflatable elements, in particular tubular air chambers, are arranged.

In accordance with a preferred embodiment of the invention, these air chambers have a configuration which has an upper face and a lower face substantially parallel to the central band.

According to a further aspect thereof, the invention also relates to a method and an apparatus for using the belt above, whose features are described further below and summarised in the claims which will follow.

Further characterising features and advantages of the invention will emerge more clearly from the detailed description of a non-limiting embodiment thereof, which will be illustrated hereinbelow with reference to the accompanying drawings wherein:
- Fig. 1 shows, as already mentioned, a detail of a belt for storing strip-shaped semifinished products according to the known art;
- Fig. 2 shows a detail of a belt for storing strip-shaped semifinished products, according to the present invention;
- Figures 3 and 4 show an apparatus for using the strip according to Fig. 2, in respective operating conditions and with a part removed;
- Fig. 5 shows a view from another angle, and partially sectioned, of the abovementioned apparatus.

In these drawings, 10 denotes the support belt according to the invention.

This belt comprises a central band 12 consisting of two juxtaposed sheets 12a, 12b made of a special fabric which will be better considered below; air chambers 13 and 14 are present along the edges of the central band. Said air chambers are preferably divided transversely into segments 13a, 14a, 13b; 14b, 13c, 14c; etc., by means of stitches 15 and 16; this helps to increase the flexibility of the belt 10, facilitating rolling-up thereof in a coil.

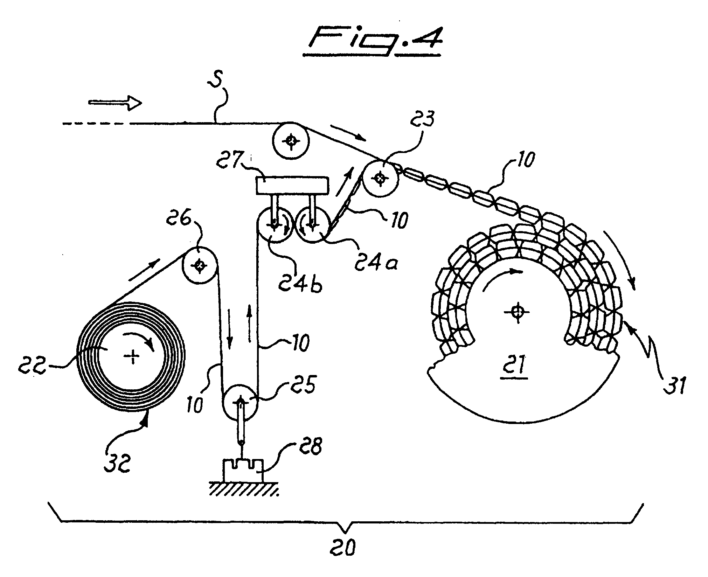

As can be seen from Figure 2, the belt 10 is obtained by superimposing two sheets 12a, 12b of fabric or other suitable material, connecting them together by means of strong threads 17 and 18 having the same length and situated inside the air chambers 13 and 14; along the central band 12 as well as in the remaining zones of the belt, the two fabric sheets are kept attached to each other, for example by means of a special stitching.

Preferably, the belt 10 formed by the two superimposed sheets is obtained with a special fabric, commonly called Drop Stitch Fabric (abbreviated below as DSF) and used for other purposes, in particular in the field of air-inflated boats; in the present invention this fabric is made impermeable to air by means of lining with any suitable impermeable material, preferably of the polymeric type, for example plasticized PVC, or with polychloroprene or polyethylene chlorosulphonated, commercially known with the registered trademark "Hypalon".

This latter solution is to be preferred especially because of its chemical resistance to attack by oxidizing agents.

A fabric of the DSF type which may be used to implement the invention is commercially available from the French company TISSAVEL.

The threads 17, 18 are fixed to the fabric by means of stitching (obviously other solutions may be used for this purpose) and have the function of providing the air chambers 13 and 14 with the desired shape when they are inflated; indeed, if these threads were not present, the chambers 13 and 14 owing to the effect of the air under pressure, would assume a cylindrical or in any case convex tubular shape different from the substantially prismatic shape shown in Figure 2.

In this case, indeed, since the threads 17 and 18 have the same length, they mutually retain the upper and lower surfaces of the respective air chambers 13, 14 when the latter are inflated, keeping them basically parallel with each other and the central band 12.

In these connection it should be pointed out that the transverse stitches 15 and 16 which define the segments into which the air chambers 13 and 14 are divided, allow the air to pass between one segment and the next one so that the latter communicate with each other: this helps to inflate, and deflate the air chambers during use, as will be explained in greater detail below.

It hardly needs to be mentioned that for the operations involving inflation and deflation of the air chambers 13 and 14, the belt 10 is provided at one end with a pair of connectors 19 (one for each air chamber) so that they may be rapidly connected to a source of pressurised fluid.

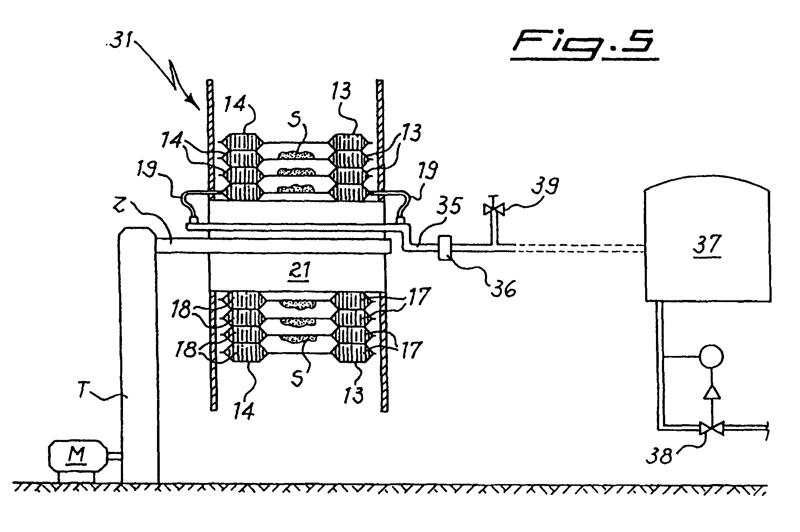

During the course of the tyre production cycle, the support belt 10 is used with the apparatus 20 which can be seen in Figure 3.

This apparatus essentially comprises two rotating drums onto which the belt 10 is wound and unwound, depending on the operating phases.

More precisely, the first rotating drum consists of the reel 21 of a storage coil mounted on a spindle Z of an associated actuating group; the latter comprises, in a manner known per se, also a motor M and a transmission T.

The second rotating drum, on the other hand, comprises a "beam", i.e. a cylinder without lateral flanges for axially containing the wound product; it is known that the reel differs from the beam precisely for the presence of lateral flanges integral with the core.

The beam 22 is also mounted on a spindle forming part of an associated actuating group not shown in the drawings because similar to that already considered for the reel 21.

For the reasons which will emerge more clearly below, the diameter of the beam 22 in the apparatus according to the invention is preferably smaller than that of the reel 21.

In the light of the above introduction it should merely be pointed out that in the remainder of this description the terms drum(s), reel and beam will be used with the meanings as defined above.

A belt feed path, along which rolls deviating the belt are present, is defined between the two rotating drums.

Some of these rolls, indicated by 23, 25 and 26, are preferably idle, while the rolls 24a, 24b are counter-rotating and kept pressed against each other by a device 27 which may be of the spring type, pneumatic cylinder type or other.

In accordance with a preferred embodiment, the pair of counter-rotating rolls 24a, 24b is controlled by a permanent-magnet brushless electric motor.

The idle roll 25 is preferably attached in a fixed manner to the floor, or to a wall or to the frame of the apparatus, by means of a load sensor 28 which allows detection of the tension (or pulling force) of the belt 1.0 wound onto the beam 22.

In particular, the values detected by the sensor 28 are used in conjunction with a suitable adjustment algorithm, in order to control the motor of the beam 22 during the various operating phases of the apparatus, which will be described below.

In a similar manner to the motor of the counter-rotating rolls 24a, 24b, the motors of the actuating groups of the reel 21 and the beam 22 are preferably of the permanent-magnet brushless type.

With reference to Figures 3 and 4, it is possible to see how the reel 21 of the corresponding coil, indicated by 31, receives the winding of the belt 10 together with the rubber strip S of a component for the manufacture of tyres; on the other hand, numeral 32 indicates the winding consisting of the belt 10 alone without the rubber strip S.

More specifically, the belt 10 which is present on the coil 31 has the two air chambers 13 and 14 which are kept inflated to an operating pressure of about 20 kPa (0.2 bar); for this purpose, the belt is connected, by means of connectors 19 (Fig. 5), to a connection nozzle 35 situated on the reel 21 for supplying fluid under pressure.

The connection nozzle 35 is coupled, in an axial position with respect to the reel, to a sealed coupling for supplying air from a tank 37; the latter may in turn be supplied by the normal compressed-air network of the plant or a compressor associated therewith.

It is important to note that the operating pressure inside the air chambers 13 and 14 must be kept at a predefined level both during unrolling of the belt 10 from the coil 31 and when it is rolled up thereon; for this purpose the apparatus 20 is provided with valves 38, 39 which regulate the air pressure inside the chambers 13, 14 and in the tank 37, as will be explained in greater detail below.

In the winding 32, on the other hand, no air is present inside the chambers 13, 14 and therefore the dimensions thereof, as well as those of the associated beam 22, are smaller.

In order to understand the operating principle of the belt according to the invention, it may be useful to compare first of all Figures 1 and 2, wherein some similarities between the respective belts shown therein may be seen.

From this comparison it can be easily understood how the air chambers 13 and 14, which are divided into the segments 13a, 14a, 13b, 14b, etc., when they are kept under pressure, perform the same function as the linear elements 3-6 of the known art, both as regards supporting of the central band 12 of the belt and as regards the spacing of the turns of the coil into which a strip of rubber S is wound.

Obviously the thickness of the inflated air chambers must be such as to prevent compression of the strip S (see Fig. 5).

It is also important to point out that the air chambers 13 and 14, when they are inflated, have upper and a lower surface which are substantially flat (and in any case not convex) owing to the fact that they are stitched with the threads 17 and 18; this ensures more stable seating between adjacent turns of the wound reel, thereby preventing the negative consequences due to the mutual axial displacements caused accidentally.

Indeed, when the belt 10 is rolled up, the lower surface of each segment 13a, 14a, 13b, 14b, etc., of the air chamber 13, 14, rests on the upper surface of a segment of the adjacent turn in the reel so as to ensure a correct superimposed arrangement thereof even in the case of relative axial displacements of adjacent turns, for example following shocks or other similar circumstances.

However, on the one hand, the example of belt according to the invention offers performances which are equivalent to those of the belt of the prior art shown in Figure 1, and on the other hand,it is able to overcome all the drawbacks which are associated with the latter and referred to above.

This is due to the fact that the air chambers 13 and 14 may be deflated after the strip S has been separated from the belt 10; in this way it is possible to roll up subsequently the belt forming a winding having dimensions which are markedly smaller than the initial dimensions for storage of the strip S, when the air chambers are under pressure.

Consequently, therefore, the invention is able to provide considerable advantages due to the reduction in volume of the belt wound onto the beam, in particular as regards handling and storage of the empty-belt windings which are reused in order to store new strips S.

Furthermore, in the case of the invention, the belt 10 supporting the strip S is made entirely of flexible materials such as the DSF fabric mentioned above; this allows the belt to be wound up and unwound in an almost countless number of times, without the danger of breakage thereof due to fatigue.

This important result is not possible, however, in the state of the art shown in Fig. 1 where the linear elements 3-6 are made of a semi-rigid material, the thickness thereof remains unvaried during the various operating phases of the working cycle.

The use of the belt according to the invention during the production of tyres is performed preferably in accordance with the method and preferably using the apparatus 20 described hereinbelow.

In Figure 3 this apparatus is shown during an operating phase of the working cycle wherein the storing coil 31 containing the belt 10 and the rubber strip S is unwound and the former is taken up on the beam 22, while the latter is conveyed away for subsequent use.

In particular, take-up of the belt 10 is performed by rolling it up tightly on the beam 22 so that the various segments 13a, 14a; 13b, 14b, etc, which are progressively supplied into the take-up winding 32, are compressed owing to the tension of the belt and its curvature along the cylindrical surface of the turns.

This compression effect has the function of expelling the air from the segments of the belt 10 which are wound onto the beam and, since these segments intercommunicate along the belt, air will accumulate in the part thereof located upstream of the winding 32: therefore, the pressure of the air in this belt part (which also comprises the coil 31) will tend to increase.

It is preferable to avoid this pressure increase, since it may cause damage to the belt or may prevent it from passing along the deviation rolls; for this reason the apparatus 20 is provided with a vent valve 39 which has the function of keeping the pressure inside the belt below a predefined safety level.

This valve is calibrated so as to release the air when it reaches, inside the chambers 13, 14, a pressure which is greater than a predefined limit (slightly greater than the operating pressure) and preferably not greater than 22 kPa.

It can be understood that, in order to arrange the belt 10 tightly on the take-up winding 32, a high tension must be maintained along the belt section which is located upstream of this winding.

On the other hand, for correct unwinding of the belt 10 which is wound up into the coil 31, it is necessary to prevent compression of the turns of the winding such that the segments of the air chambers 13, 14 remain at the rated operating pressure (about 20 kPa).

Consequently, the belt 10 must not be unwound from the storing coil 31 with an excessively high tension, which would cause compression of the air chambers: along the belt section immediately downstream of the coil 31 it is therefore necessary to maintain a tension T₁ which is lower than the tension T₂ exerted along the section upstream of the winding 32.

The difference in tension along the belt is obtained by means of two counter-rotating rolls 24a, 24b: they are in fact designed to exert during this operating phase of the apparatus, a braking action on the belt 10 which is simultaneously driven by rotation of the beam 22 onto which the take-up winding 32 is collected.

In other words, during this phase, the driving force for moving the belt and winding it onto the beam 22 is provided entirely by the actuating group of the latter; at the same time this force is opposed by the braking action provided mainly by the pair of rolls 24a, 24b and, to a lesser extent, by the first rotating drum which also brakes unwinding of the belt from the storing coil 31 (the various frictional forces arising along the belt path may be disregarded).

Preferably, 95% of the braking action is provided by the opposing rolls 24a, 24b and the remaining 5% is provided by the motor M operating the spindle Z on which the reel 21 is mounted.

During this time interval, the adjustment of the apparatus 20 performed by its control system ensures that the torque of the respective motors which actuate the beam 22 and the rolls 24a, 24b, is kept constant.

Alternatively, the control system of the apparatus 20 might be configured so as to keep the pulling force exerted by the two rotating drums, constant.

As mentioned above, these adjustments have the function of keeping the tension T₂ at which the belt 10 is wound onto the beam 22 (detected by the load sensor 28) at the value necessary for obtaining compression of the air chambers 13 and 14.

When the belt 10 has been taken up entirely on the beam 22, it is then removed: it is quite obvious that the fairly compact size of the winding 32 formed by it simplifies considerably the operations.

In the present case, it must be pointed out that the reduced size of the belt taken up on the beam 22, also depends on the fact that the latter may have a smaller diameter than that of the reel 21 (see Figures 3 and 4) since the flexibility of the belt 10 according to the invention allows it to be rolled up with a smaller radius of curvature.

As can be seen, therefore, the problems of the prior art associated with the bulky size of the stored belt windings are entirely solved by the invention.

With reference to Figure 4 it is now possible to consider operation of the apparatus 20 during an operating phase which is the opposite of that considered above.

During this phase, the strip S of a tyre component supplied for example by a drawing machine, is wound together with the belt 10, onto the storage coil 31.

Consequently, considering the direction of rotation indicated by the arrows, it can be seen that in this case the belt 10 is unwound from the beam 22 and, following in reverse sequence the path already described above, reaches the deviation roll 23 where it encounters the strip S.

The latter is placed onto the belt, following which they are wound together onto the reel 21, -thus building up the storing coil 31 which will then be used during the production of tyres in the manner already described.

It must be pointed out here that the force required to move the belt 10 during this phase, is provided mainly by the pair of counter-rotating rolls 24a, 24b and to a lesser extent by the motor M of the actuating group for the reel 21, while the beam 22 exerts only a braking action on the belt which has the function of keeping it at the tension T₂ required to obtain compression of the air chambers 13 and 14 in accordance with what was already explained above.

In particular, preferably 95% of the power for feeding the belt is provided by the motor of the rolls 24a, 24b and the remaining 5% is provided by the actuating motor M.

Operation of the apparatus 20 during this phase may be briefly summarised as follows.

The air chambers 13 and 14 of the wound belt combined with the strip S inside the coil 31, are kept at the operating pressure of 20 kPa; this is performed by the valve 38 which, as the belt 10 is wound around the coil 31 (and therefore the pressure inside it tends to decrease), allows the supply of an air flow from the compressed-air supply system to the coupling 36, preferably via the tank 37, so as to keep the pressure at the predefined level.

In other words, the valve 38 is a regulating device which is set to a pressure value (preferably not less than 18 kPa) lower than the rated pressure inside the air chambers 13 and 14, and which has the function of controlling the flow of air necessary to restore the desired pressure (i.e. 20 kPa) in the storage coil 31.

The tank 37, on the other hand, acts as a plenum chamber for preventing oscillations and sudden pressure rises inside the air chambers.

In a similar manner to that which occurs during the other operating phase, in this case also it is necessary to avoid compression of the turns (and therefore of the air chambers 13, 14) of the coil 31; for this purpose, the tension T₁ along the belt section between this coil and the opposing rolls 24a, 24b, must be controlled with reference to a predefined value.

On the other hand, however, the belt part wound onto the beam 22 must remain under a high tension T₂ so as to maintain compression of the air chambers 13 and 14 along the cylindrical surface of the turns of the winding 32, as already mentioned above.

This high tension T₂ is obtained by means of the driving action of the belt 10 which is provided by the counter-rotating rolls 24a, 24b and which is opposed by the braking action caused by the beam 22.

By way of completion of the description of the preceding example, some purely exemplary numerical data are provided in the table below, which refer to respective dimensional and functional parameters of the prototype system described above.

It should merely be pointed out that, in the table, the internal diameter of the storage coil 31 must be regarded as being the external diameter of the core onto which the belt 10 together with the strip S is wound.

**TABLE**

| | |
|---|---|
| External diameter of storage coil | 1300 mm |
| Internal diameter " " | 500 mm |
| Width of belt | 410 mm |
| Length of belt | 75 mm |
| Width of belt air chambers (inflated) | 55 mm |
| Height of air chambers (inflated) | 15 mm |
| Nominal pressure of air chambers | 20 kPa |
| Winding tension of belt on the storage coil | 50 N |
| Winding tension of belt on take-up beam | 1000 N |
| Power of the pulling (counter-rotating rolls) group | 1 kW |
| Power of the storage coil motor | 100 W |
| Power of the beam motor | 1 kW |
| Capacity of the air tank | 0.02 m³ |

Preferably, the model GD 25 produced by the Italian company TURIAN was chosen as the rotary coupling.

Moreover, as regards the operating speed of the apparatus, during the operating phase shown in Fig. 4, the feed speed of the belt 10 must be preferably substantially the same as that of the strip S supplied by the drawing machine, so as to allow correct uniting thereof and subsequent winding onto the reel 31, without relative slipping of belt and strip.

This speed may vary depending on the cases but usually is between 2 and 20 m/min.

During the operating phase shown in Figure 3, on the other hand, the speed will depend on the methods for production of the tyres for which the strip S is intended, downstream of the apparatus 20; therefore supplying of the strip S may also not be continuous, that is to say that interruptions may occur, for example, after manufacture of a tyre and before the start of processing of the next tyre.

For the feeding speed of the belt 10 it is possible, however, to refer, by way of an initial guide, to the values indicated above for reverse operation of the apparatus.

Obviously variations of the invention with respect to that described hitherto are possible.

For example, as already mentioned above the division of the air chambers 13 and 14 into segments 13a, 14a, 13b, 14b, etc, is not indispensable; these segments have the function, in fact, of facilitating rolling-up of the belt when the pressure is maintained inside it, but they could also be eliminated, in particular in the case they are used for small pressures lower than those considered.

This will depend above all on the dimensions (width, thickness, etc.) of the belt and on the type of material used to manufacture it.

In this connection it must be pointed out that the formation of the belt 10 with two superimposed sheets joined together, is only one preferred, but not the sole, embodiment; for example, it is possible to imagine making the central band 12 with a material different from that of the two air chambers 13 and 14 (for example plastic or other material) and hence fixing it thereto by means of stitching, gluing or other means.

It is also obvious that, although the belt has been provided for supporting tyre components, it may in any case be advantageously applied in all those areas where operating conditions similar to those considered here exist. Indeed it may be understood that with the belt according to the invention it is possible to support strips not only of rubber, but also of other material, for example paper (cellulose or the like), textile or others.

The apparatus with which the belt according to the invention is used may also be configured differently from that which has been described hitherto.

In other words, it is possible to state that the belt of the invention, owing to its operating principle based on the possibility of inflating and deflating it in accordance with the operational requirements, opens up the way for several applications which can be implemented using apparatus that may vary from case to case.

For example, the operating mode of the above apparatus 20 is based on the fact of taking up or unwinding the belt 10, with a high tension T₂ in the winding 32 and a low tension T₁ in the coil 31.

As already explained, this allows control of the air present inside the belt and take-up of the latter in a winding having dimensions smaller than those of the known art.

In this case the variation in tension of the belt between the rotating drums is obtained using a suitable pulling group comprising the two counter-rotating rolls 24a, 24b which, during one operating phase, have the function of braking the belt and, during the other phase, of driving it, co-ordinating the action with that of the drums onto which the belt turns are wound.

It is possible to understand, however, that the methods by means of which the tension of the belt between the two drums is varied may differ from this operating system; for example, it is also possible to use other means which are different from the counter-rotating rolls.

It also hardly needs to be mentioned that, in order to brake the above mentioned drums, it is possible to use proper brakes instead of adjusting the action of the associated actuating motors.

Finally, it is also obvious that supplying of the air to the chambers 13, 14 of the belt may also be performed using systems other than those considered above.

For example it is possible to consider providing an apparatus wherein the tank 37 is located inside the reel 21 of the storage coil 31, instead of at a distance therefrom. Also, as regards the connection of the air chambers to this tank, it is therefore possible to have solutions which are different from those schematically shown in the drawings.

These and other possible variations, however, all fall within the scope of the claims which follow.

## Claims

1. Belt for supporting strips of deformable material, comprising a flexible central band (12) onto which a strip (S) of said material is placed, **characterized in that** variable-configuration air chambers (13, 14) are arranged along the edges of the central band.

2. Belt according to Claim 1, wherein the air chambers (13, 14), in the inflated condition, have respective upper and lower surfaces which are substantially flat and parallel to the central band (12).

3. Belt according to Claim 2, wherein threads (17, 18) extend between the upper surfaces and the lower surfaces of the air chambers (13, 14), said threads. mutually retaining said surfaces in the inflated condition of the air chambers, keeping them substantially parallel to the central band (12).

4. Belt according to Claim 3, wherein the air chambers (13, 14) are divided, transversely with respect to their longitudinal extension, into intercommunicating segments (13a, 14a; 13b, 14b).

5. Belt according to Claim 4, formed by two sheets (12a, 12b) of flexible material which are applied one upon the other, being juxtaposed in the region of the central band (12) and separated from each other in the zones adjacent thereto so as to form the air chambers (13, 14).

6. Belt according to Claim 5, wherein the flexible material is a fabric which is made impermeable to air.

7. Belt according to Claim 6, wherein said fabric is made impermeable to air by means of a lining based on one of the following materials: plasticized PVC, polychloroprene or polyethylene chlorosulphonate.

8. Belt according to Claim 7, wherein the threads (17, 18) present in the air chambers (13, 14) are applied by means of stitching of the superimposed sheets of fabric.

9. Belt according to Claim 1, wherein the strip (S) of deformable material is a tyre rubber component.

10. Apparatus for using the belt (10) according to any one of Claims 1 to 9, comprising:
- a storage coil (31) wherein a part of the belt is wound onto a reel (21), with a first predefined winding tension (T₁);
- a take-up winding (32) wherein the remaining part of the belt is wound onto a beam (22), with a second tension (T₂) greater than the first tension;
- first devices (24a, 24b) for varying the tension along the belt between the storage coil and the take-up winding;
- second devices (19, 35, 36, 37, 38, 39) for keeping the air chambers (13, 14) inflated in the belt part wound around the storage coil;
- third devices (M, T, Z) for performing rotation of the reel and the beam.

11. Apparatus according to Claim 10, wherein the devices for varying the tension along the belt (10) between the storage coil (31) and the take-up winding (32) comprise a pair of counter-rotating rolls (24a, 24b) which are kept pressed against each other and between which the belt is passed.

12. Apparatus according to Claim 10, wherein the devices for keeping the air chambers (13, 14) inflated comprise a pressurised tank (37) connected to said chambers with a coupling (36) of the rotary type.

13. Method for feeding a strip (S) of deformable material to a user, comprising the following steps:
- providing a belt (10) for supporting the strip, having a flexible central band (12) along the edges thereof air chambers (13, 14) extend;
- providing a storage coil (31) in which the strip (S) supported by the central band (12) of the belt (10) is wound together with the latter, while keeping the air chambers (13,14) under pressure;
- unwinding the coil (31) so as to convey the strip (S) towards the user and to roll up the belt (10) separated from it after having deflated the air chambers thereof, wherein the air chambers (13, 14) are deflated by winding the belt (10) onto a beam (22) with a predefined tension (T₂) greater than the tension (T₁) with which the belt is unwound from the storage coil (31) and allowing the air to escape from the belt part wound in such coil.

14. Method for storing a strip (S) of deformable material on a storage coil (31), comprising the steps of:
- providing a belt (10) for supporting the strip, having a flexible central band (12) along the edges thereof air chambers (13, 14) extend;
- arranging this belt in a take-up winding (32) with the air chambers deflated;
- winding up the belt together with a strip (S) placed on it so as to form the storage coil, while inflating the air chambers along the part of the belt which is wound together with the strip and keeping them deflated in the take-up winding, wherein the air chambers (13, 14) in the take-up winding (32) are kept deflated by unwinding the belt (10) with a predefined tension (T₂), greater than the tension (T₁) with which it is wound . onto the storage coil (31).

## Patentansprüche

1. Gurt (10) zum Halten von Streifen eines verformbaren Materials mit einem flexiblen zentralen Band (12), auf dem ein Streifen (S) des Materials angeordnet ist, **dadurch gekennzeichnet, dass** längs der Ränder des zentralen Bandes Luftkammern (13, 14) mit variabler Form angeordnet sind.

2. Gurt nach Anspruch 1, bei welchem die Luftkammern (13, 14) im luftgefüllten Zustand jeweils obere und untere Flächen haben, die im wesentlichen eben und parallel zum zentralen Band (12) sind.

3. Gurt nach Anspruch 2, bei welchem sich zwischen den oberen Flächen und den unteren Flächen der Luftkammern (13, 14) Fäden (17, 18) erstrecken, die die Flächen im luftgefüllten Zustand der Luftkammern gegenseitig festhalten und sie im wesentlichen parallel zu dem zentralen Band (12) halten.

4. Gurt nach Anspruch 3, bei welchem die Luftkammern (13, 14) bezüglich ihrer Längserstreckung quer in miteinander in Verbindung stehende Segmente (13a, 14a, 13b, 14b) unterteilt sind.

5. Gurt nach Anspruch 4, gebildet von zwei Bahnen (12a, 12b) eines flexiblen Materials, die aufeinander aufgebracht sind, im Bereich des zentralen Bandes (12) aneinandergrenzend angeordnet und in daran angrenzenden Zonen voneinander getrennt sind, so dass sie die Luftkammern (13, 14) bilden.

6. Gurt nach Anspruch 5, bei welchem das flexible Material ein Gewebe ist, dass für Luft undurchlässig gemacht ist.

7. Gurt nach Anspruch 6, bei welchem das Gewebe mittels einer Auskleidung für Luft undurchlässig gemacht wird, die auf einem der folgenden Materialien basiert: plastifiziertes PVC, Polychloropren oder Polyethylenchlorsulphonat.

8. Gurt nach Anspruch 7, bei welchem die in den Luftkammern (13, 14) vorhandenen Fäden (17, 18) mittels Vernähen der aufeinander gelegten Gewebebahnen angebracht sind.

9. Gurt nach Anspruch 1, bei welchem der Streifen (S) aus verformbaren Material ein Kautschukbauelement eines Reifens ist.

10. Vorrichtung zur Verwendung des Gurts (10) nach einem der Ansprüche 1 bis 9,
- mit einem Speicherwickel (31), wobei ein Teil des Gurts auf eine Rolle (21) mit einer ersten vorgegebenen Wickelspannung (T₁) gewickelt ist,
- mit einem Aufnahmewickel (32), wobei der restliche Teil des Gurts auf einen Träger (22) mit einer zweiten Spannung (T₂) gewickelt ist, die größer als die erste Spannung ist,
- mit ersten Vorrichtungen (24a, 24b) zum Ändern der Spannung längs des Gurts zwischen dem Speicherwickel und dem Aufnahmewickel,
- mit zweiten Vorrichtungen (19, 35, 36, 37, 38, 39) zum Halten der Luftkammern (13, 14) im luftgefüllten Zustand in dem Gurtteil, der auf dem Speicherwickel gewickelt ist, und
- mit dritten Vorrichtungen (M, T, Z) zum Ausführen einer Drehung der Rolle und des Trägers.

11. Vorrichtung nach Anspruch 10, bei welcher die Vorrichtungen zum Ändern der Spannung längs des Gurts (10) zwischen dem Speicherwickel (31) und dem Aufnahmewickel (32) ein Paar von entgegendrehenden Walzen (24a, 24b) aufweisen, die gegeneinander gedrückt gehalten sind und zwischen denen der Gurt hindurchgeführt wird.

12. Vorrichtung nach Anspruch 10, bei welchem die Vorrichtungen zum Halten der Luftkammern (13, 14) im luftgefüllten Zustand einen Druckbehälter (37) aufweisen, der mit den Kammern über eine Koppelung (36) in drehbarer Weise verbunden ist.

13. Verfahren zum Zuführen eines Streifens (S) aus verformbaren Material zu einem Benutzer, wobei das Verfahren die folgenden Schritte aufweist:
- Bereitstellen eines Gurts (10) zum Halten des Streifens, der ein flexibles zentrales Band (12) hat, längs dessen Ränder sich Luftkammern (13, 14) erstrecken,
- Bereitstellen eines Speicherwickels (31), bei dem der Streifen (S), der von dem zentralen Band (12) des Gurts (10) gehalten wird, zusammen mit Letzterem gewickelt wird, während die Luftkammern (13, 14) unter Druck gehalten werden, und
- Abwickeln des Wickels (31), so dass der Streifen (S) zum Benutzer hin transportiert wird, um den Gurt (10), der von ihm getrennt worden ist, nachdem seine Luftkammern entleert worden sind, aufzuwickeln,
- wobei die Luftkammern (13, 14) durch Wickeln des Gurts (10) auf einen Träger (22) mit einer vorgegebenen Spannung (T₂) entleert werden, die größer ist als die Spannung (T₁), mit der der Gurt von dem Speicherwickel (31) abgewickelt wird, und wobei die Luft aus dem zu einem solchen Wickel gewickelten Gurtteil entweichen kann.

14. Verfahren zum Speichern eines Streifens (S) aus verformbarem Material auf einem Speicherwickel (31), wobei das Verfahren die Schritte aufweist:
- Bereitstellen eines Gurts (10) zum Halten des Streifens (S), der ein flexibles zentrales Band hat, längs dessen Ränder sich Luftkammern (13, 14) erstrecken,
- Anordnen des Gurts in einem Aufnahmewickel (32) mit den entleerten Luftkammern, und
- Aufwickeln des Gurts zusammen mit einem Streifen (S), der auf ihm angeordnet ist, um den Speicherwickel zu bilden, während die Luftkammern längs des Teils des Gurts mit Luft gefüllt werden, der zusammen mit dem Streifen gewickelt ist, wobei sie in dem Aufnahmewickel im entleerten Zustand gehalten sind, und
- wobei die Luftkammern (13, 14) in dem Aufnahmewickel (32) entleert gehalten werden, indem der Gurt (10) mit einer vorgegebenen Spannung (T₂) entleert gehalten wird, die größer ist als die Spannung (T₁), mit der er auf den Speicherwickel (31) gewickelt wird.

## Revendications

1. Courroie (10) pour supporter des bandes de matériau déformable, comprenant un ruban central souple (12) sur lequel est placée une bande (S) dudit matériau, **caractérisée en ce que** des chambres à air à configuration variable (13, 14) sont disposées le long des bords du ruban central.

2. Courroie selon la revendication 1, dans laquelle les chambres à air (13, 14), dans l'état gonflé, ont des surfaces supérieures et inférieures respectives qui sont sensiblement plates et parallèles au ruban central (12).

3. Courroie selon la revendication 2, dans laquelle des bandes de roulement (17, 18) s'étendent entre les surfaces supérieures et les surfaces inférieures des chambres à air (13, 14), lesdites bandes de roulement retenant mutuellement lesdites surfaces dans l'état gonflé des chambres à air, en les maintenant sensiblement parallèles au ruban central (12).

4. Courroie selon la revendication 3, dans laquelle les chambres à air (13, 14) sont divisées, transversalement par rapport à leur dimension longitudinale, en segments communiquant entre eux (13a, 14a ; 13b, 14b).

5. Courroie selon la revendication 4, formée par deux feuilles (12a, 12b) de matériau souple qui sont appliquées l'une sur l'autre, en étant juxtaposées dans la région du ruban central (12) et séparées l'une de l'autre dans les zones adjacentes à celle-ci afin de former les chambres à air (13, 14).

6. Courroie selon la revendication 5, dans laquelle le matériau souple est un tissu que l'on a rendu imperméable à l'air.

7. Courroie selon la revendication 6, dans laquelle ledit tissu est rendu imperméable à l'air au moyen d'une doublure basée sur l'un des matériaux suivants : le PVC plastifié, le polychloroprène ou le polyéthylène chlorosulphonate.

8. Courroie selon la revendication 7, dans laquelle les bandes de roulement (17, 18) présentes dans les chambres à air (13, 14) sont appliquées par agrafage des feuilles de tissu superposées.

9. Courroie selon la revendication 1, dans laquelle la bande (S) de matériau déformable est un composant de pneu en caoutchouc.

10. Dispositif pour utiliser une courroie (10) conforme à l'une quelconque des revendications 1 à 9, comprenant :
- une bobine de stockage (31) dans laquelle une partie de la courroie est enroulée sur un dévidoir (21), avec une première tension d'enroulement prédéfinie (T₁) ;
- un enroulement régulateur (32) dans lequel la partie restante de la courroie est enroulée sur une ensouple (22), avec une seconde tension (T₂) supérieure à la première tension ;
- des premiers dispositifs (24a, 24b) pour faire varier la tension le long de la courroie entre la bobine de stockage et l'enroulement régulateur ;
- des deuxièmes dispositifs (19, 35, 36, 37, 38, 39) pour maintenir les chambres à air (13, 14) gonflées dans la partie de courroie enroulée autour de la bobine de stockage ;
- des troisièmes dispositifs (M, T, Z) pour effectuer la rotation du dévidoir et de l'ensouple.

11. Dispositif selon la revendication 10, dans lequel les dispositifs pour faire varier la tension le long de la courroie (10) entre la bobine de stockage (31) et l'enroulement régulateur (32) comprennent une paire de rouleaux contrarotatifs (24a, 24b) qui sont maintenus pressés l'un contre l'autre et entre lesquels on fait passer la courroie.

12. Dispositif selon la revendication 10, dans lequel les dispositifs pour maintenir les chambres à air (13, 14) gonflées comprennent un réservoir sous pression (37) relié auxdites chambres avec un accouplement (36) de type rotatif.

13. Procédé pour amener une bande (S) de matériau déformable à un utilisateur, comprenant les étapes consistant à :
- prévoir une courroie (10) pour supporter la bande, comportant un ruban central souple (12) le long des bords duquel s'étendent des chambres à air (13, 14) ;
- prévoir une bobine de stockage (31) dans laquelle la bande (S) supportée par le ruban central (12) de la courroie (10) est enroulée avec ce dernier, tout en maintenant les chambres à air (13, 14) sous pression ;
- dérouler la bobine (31) de manière à transporter la bande (S) vers l'utilisateur et à enrouler la courroie (10) séparée de celui-ci après avoir dégonflé ses chambres à air,
dans lequel les chambres à air (13, 14) sont dégonflées en enroulant la courroie (10) sur une ensouple (22) avec une tension prédéfinie (T₂) supérieure à la tension (T₁) avec laquelle la courroie est déroulée de la bobine de stockage (31) et en laissant l'air s'échapper de la partie de la courroie enroulée dans cette bobine.

14. Procédé pour stocker une bande (S) de matériau déformable sur une bobine de stockage (31), comprenant les étapes consistant à :
- prévoir une courroie (10) pour supporter la bande, comportant un ruban central souple (12) le long des bords duquel s'étendent des chambres à air (13, 14) ;
- disposer cette courroie en un enroulement régulateur (32) avec les chambres à air dégonflées ;
- enrouler la courroie en même temps qu'une bande (S) placée sur elle afin de former la bobine de stockage, tout en gonflant les chambres à air le long de la partie de la courroie qui est enroulée avec la bande et en les maintenant dégonflées dans l'enroulement régulateur,
dans lequel les chambres à air (13, 14) de l'enroulement régulateur (32) sont maintenues dégonflées en déroulant la courroie (10) avec une tension prédéfinie (T₂), supérieure à la tension (T₁) avec laquelle elle est enroulée sur la bobine de stockage (31).
